# EUROPÄISCHE PATENTSCHRIFT

(11) **EP 3 729 949 B1**
(45) Veröffentlichungstag und Bekanntmachung des Hinweises auf die Patenterteilung: **19.04.2023**
(21) Anmeldenummer: 20170856.7
(22) Anmeldetag: 22.04.2020
(51) Int. Cl.: A01D 90/12

(54) **LADEWAGEN MIT ERNTE-ERTRAGSERFASSUNG**
LOADING CARRIAGE WITH CROP YIELD DETECTION
CHARIOT DE CHARGEMENT À DÉTECTION DE RENDEMENT DE LA RÉCOLTE

(30) Priorität: 24.04.2019 DE 102019110556
(43) Veröffentlichungstag der Anmeldung: 28.10.2020
(73) Patentinhaber: B. Strautmann & Söhne GmbH u. Co. KG, 49196 Bad Laer (DE)
(72) Erfinder: Maag, Frederik, 49219 Glandorf (DE); Rehbock, Daniel, 49074 Osnabrück (DE); Wegmann, Benjamin, 49497 Mettingen (DE)
(74) Vertreter: Dr. Träger & Strautmann PAe PartG mbB

(56) Entgegenhaltungen:
- EP-A1- 1 053 671
- EP-B1- 3 020 266

## Beschreibung

Die vorliegende Erfindung betrifft eine Erntemaschine zur Ernte von Halm- und/oder Blattgut nach dem Oberbegriff des Anspruchs 1 sowie ein Verfahren zum Betrieb einer solchen Erntemaschine nach Anspruch 9. Bei der Erntemaschine kann es sich beispielsweise um einen Ladewagen oder eine Ballenpresse handeln.

Aus der EP 3 020 266 B1 ist ein Ladewagensystem sowie ein Verfahren zum Sammeln von Halmmaterial und zur Messung der Inhalte des gesammelten Halmmaterials bekannt.

Das Ladewagensystem umfasst einen Laderaum zum Tragen und Speichern von Halmmaterial, eine Aufnahmevorrichtung zum Sammeln von Halmmaterial und zum Fördern des gesammelten Halmmaterials in den Laderaum, ein Sensorsystem zum Messen eines Erntegut-Inhaltsstoffes und ein Sensorsystem (GPS) zur Erfassung der Ortsposition. Weiterhin umfasst der Ladewagen ein Wiegesystem, welches kontinuierlich das Gewicht des Laderaums und damit das Gewicht des Ernteguts erfasst. Die erfassten Gewichtsdaten, Inhaltsstoffe sowie die jeweiligen Ortspositions-Daten, an denen die Gewichtsdaten und die Inhaltsstoffe erfasst wurden, werden in einem Datenprozessor verarbeitet und können auf vielfältige Weise analysiert und weiterverarbeitet werden. Insbesondere ermöglichen die Daten eine teilflächenspezifische Ertragskartierung. In einer besonderen Ausführungsform wird die Datenerfassung davon abhängig gemacht, dass die Pick-up gegen das Feld gedrückt wird.

Nachteilig hieran ist, dass die Datenerfassungssysteme zumindest immer dann permanent eingeschaltet sind, wenn die Pick-up gegen das Feld gedrückt wird. Die Gewichtsdaten werden somit auch dann erfasst, wenn bei abgesenkter Pick-up kein oder nur sehr wenig Erntegut aufgenommen wird. Dies kann beispielsweise bei einem Wendemanöver oder bei Überfahren einer insbesondere geraden Wegstrecke ohne Erntegut der Fall sein. Das Sensorsystem zur Erfassung der Inhaltsstoffe liefert jedoch auch dann trotzdem Messwerte. Ist kein oder nur wenig Erntegut im Messbereich vorhanden, werden somit die Inhaltsstoffe dessen bestimmt, was sich im Messbereich befindet, beispielsweise die Inhaltsstoffe der Umgebungsluft oder des sich statisch im Messpunkt befindlichen, immer gleichen Ernteguts (= kein Materialfluss). Dadurch kann es zu falschen Rückschlüssen auf den positionsbezogenen Ernteertrag kommen.

Aus DE 10 2014 105 820 A1 ist eine Kombination aus einem Zugfahrzeug und einer davon gezogenen landwirtschaftlichen Erntemaschine bekannt, die Mittel aufweist, mit denen erkannt werden kann, ob sich die Maschine in einer Erntesituation oder in einer Feldende-Situation befindet. Mittels des offenbarten Systems kann der Fahrer des Zugfahrzeuges im Arbeitseinsatz von Überwachungs- und Einstellarbeiten entlastet werden. Die mittels der dafür vorgesehenen Sensoren erfassten Daten werden somit ausschließlich und unmittelbar zur Erzeugung von Steuerbefehlen für die Gesamt-Kombination genutzt, um bei einem Wechsel zwischen Erntefahrt und Feldende-Fahrt an der Kombination vorzunehmenden Einstellungen zu automatisieren. Eine über diesen Zweck hinausgehende Nutzung der Sensordaten ist im beschriebenen System nicht erforderlich und auch nicht vorgesehen.

EP 1 053 671 und EP 3 020 266 zeigen eine Erntemaschine gemäß des Oberbegriffs des Anspruchs 1.

Die Erfindung hat deshalb die Aufgabe, eine Erntemaschine, die für eine Ertragserfassung vorgesehen ist, und ein Verfahren zum Betrieb einer Erntemaschine so weiterzubilden, dass die beschriebenen Nachteile überwunden werden. Insbesondere ist es eine Aufgabe der Erfindung, die positionsbezogene Ertragserfassung einer Erntemaschine zu optimieren. Unter einer Erntemaschine werden alle Maschinen verstanden, die zur Ernte von Halm- und Blattgut geeignet sind. Hierbei kann es sich insbesondere um einen landwirtschaftlichen Ladewagen oder eine Ballenpresse handeln. Besonders bevorzugt ist die Ausführung der erfindungsgemäßen Erntemaschine sowie die Anwendung des erfindungsgemäßen Verfahrens für Ladewagen. Insofern wird die Erfindung nachfolgend am Beispiel eines Ladewagens erläutert. Dabei ist die Bezugnahme auf Ladewagen nicht als einschränkendes Merkmal zu verstehen, sondern grundsätzlich als beispielhafte Ausführung einer Erntemaschine.

Die vorliegende Erfindung löst die oben genannte Aufgabe durch den Gegenstand des Anspruchs 1. Ferner schafft sie das Verfahren nach Anspruch 9.

Demnach ist erfindungsgemäß vorgesehen, dass eine zweite Sensorvorrichtung vorgesehen ist, mittels derer ein Arbeits-Kennwert zur Ermittlung eines Erntebetriebs-Zustandes bestimmbar ist, so dass die positionsbezogene Ertragserfassung in Abhängigkeit des von der zweiten Sensorvorrichtung bestimmten Arbeits-Kennwertes aktivierbar ist.

In einer bevorzugten Ausführungsform ist eine Steuerung vorgesehen, mit welcher auf Basis des vom zweiten Sensorsystem ermittelten Arbeits-Kennwertes die vom ersten Sensorsystem ermittelten Daten in die positionsbezogene Ertragserfassung einbeziehbar sind. Da der Ladewagen ohnehin einen Datenprozessor umfasst, der die positionsbestimmenden Daten, die Wiegedaten und die mit dem ersten Sensorsystem ermittelten Daten in einen Zusammenhang bringt um auf dieser Basis eine positionsbezogene Ertragserfassung durchzuführen, kann die genannte Steuerung in den Datenprozessor integriert sein. Es ist aber auch möglich, die Steuerung nicht in den bereits vorhandenen Datenprozessor zu integrieren, sondern beispielsweise auf einem zweiten, vom ersten Datenprozessor unabhängigen, Datenprozessor anzuordnen.

Unter einem Arbeits-Kennwert wird ein Kennwert verstanden, auf dessen Basis ein Rückschluss hinsichtlich der Frage, ob der Ladewagen sich im Ernteeinsatz befindet, möglich ist. In Betracht kommen beispielsweise folgende Arbeits-Kennwerte:
- ein im Antriebsstrang des Ladewagens gemessenes Drehmoment,
- ein im Hydrauliksystem des Ladewagens gemessener Öldruck,
- eine mittels eines optischen Sensors erfasste Bildinformation,
- ein durch eine Lichtschranke oder ein Lichtgitter (Lichtvorhang) ausgelöster Impuls,
- ein Drehwinkelversatz eines durch den Ernteeinsatz um eine Drehachse geschwenkten Ladewagen-Aggregats,
- ein Drehwinkelversatz eines zur Einzugsunterstützung des Ernteguts vorgesehenen Niederhalters, beispielsweise eines Rollen-Niederhalters,
- ein Drehwinkelversatz eines im Erntegutstrom angeordneten Elements, beispielsweise eines Paddels, dessen Auslenkung (Drehwinkel) vom Erntegutstrom abhängig ist.

Ein besonderer Vorteil der Erfindung liegt somit darin, dass die positionsbezogene Ertragserfassung in Abhängigkeit vom Erntebetriebszustand durchführbar ist. Der ermittelte Arbeits-Kennwert ermöglicht nämlich einen unmittelbaren Rückschluss auf die aktuelle, positionsbezogene Erntesituation. Wird momentan Erntegut geerntet, das heißt, nimmt die dazu vorgesehene Aufnahmevorrichtung des Ladewagens Erntegut vom Boden auf und fördert es in Richtung Laderaum des Ladewagens, so ist es für eine positionsbezogene Ertragserfassung wichtig, dass die Momentan-Daten erfasst und verarbeitet werden. Die Erfassung von Momentan-Daten des Ernteguts kann beispielsweise erfolgen, indem ein Erntegut-Inhaltsstoff-Sensor auf den Erntegutstrom ausgerichtet ist und kontinuierlich Inhaltsstoff-Daten ermittelt. Diese Datenermittlung erfolgt bei bekannten Systemen zur Ertragskartierung auch dann, wenn momentan kein neues Erntegut von der Aufnahmeeinrichtung aufgenommen wird und der Erntegutstrom deshalb momentan nicht weitergefördert wird. Vereinfacht gesagt misst der Erntegutsensor somit kontinuierlich die Inhaltsstoffe des stillstehenden Erntegutstromes an ein und derselben Position.

Um die sich hieraus ergebenden Ungenauigkeiten bei der Ertragskartierung zu reduzieren und im besten Fall vollständig zu eliminieren, arbeiten erfindungsgemäß zwei Sensorsysteme zusammen: Das erste Sensorsystem ermittelt Erntegutdaten und das zweite Sensorsystem ermittelt den weiter oben erläuterten Arbeits-Kennwert. Auf Basis des ermittelten Arbeits-Kennwertes wird somit die positionsbezogene Ertragserfassung aktiviert beziehungsweise deaktiviert.

In einer Ausführungsform kann vorgesehen sein, dass das zweite Sensorsystem einen einzigen Sensor umfasst, der einen vordefinierten Messwert bestimmt und die Aktivierung der positionsbezogenen Ertragserfassung bei Überschreiten eines vordefinierten Messwertes erfolgt. Konkret kann beispielsweise vorgesehen sein, dass ein DrehmomentSensor das momentane Drehmoment beispielsweise der Antriebs-Gelenkwelle misst. Da das momentane Drehmoment unmittelbar von der Menge des momentan aufgenommenen Ernteguts abhängig ist, lässt sich ein Vorgabe-Wert für die Aktivierung der positionsbezogenen Ertragserfassung vordefinieren. Das Drehmoment der Antriebsgelenkwelle wird somit als Indikator dafür verwendet, ob momentan Erntegut aufgenommen wird oder nicht und ob deshalb momentan die positionsbezogene Ertragserfassung aktiviert werden soll oder nicht.

In einer weiteren Ausführungsform kann das zweite Sensorsystem so konzipiert sein, dass der Arbeits-Kennwert nicht auf Basis der Messwerte eines einzigen Sensors bestimmt wird, sondern auf Basis einer Kombination mehrere Sensoren und deren Messwerte. Auch hier wird die positionsbezogene Ertragserfassung bei Über- bzw. Unterschreiten eines vordefinieren aktiviert bzw. deaktiviert.

Alternativ oder in Ergänzung zum Ein- bzw. Ausschalten der positionsbezogenen Ertragserfassung kann auch vorgesehen sein, dass die von den Sensoren erfassten Messwerte anhand des Arbeits-Kennwertes in Kombination mit weiteren Parametern systemintern interpretiert werden. Systemintern findet damit eine Sensorfusion statt.

Bei der Sensorfusion werden somit auf Basis des vom zweiten Sensorsystem ermittelten Arbeits-Kennwertes die vom ersten Sensorsystem ermittelten Daten in die positionsbezogene Ertragserfassung einbezogen. Das zweite Sensorsystem umfasst bei der Sensorfusion somit wenigstens zwei Einzelsensoren, die unterschiedliche Daten erfassen, aus deren Kombination sich jedoch Rückschlüsse auf den Arbeitskennwert und/oder die Steuerung der Erntemaschine ableiten lassen. Die wenigstens zwei Sensoren könne an der Erntemaschine angeordnet sein. Sie können aber auch an der Zugmaschine oder an der Zugmaschine und der Erntemaschine angeordnet sein. Beispielweise können die von einem Fahrgeschwindigkeitssensor ermittelten Daten mit den Daten eines in eine Antriebsgelenkwelle integrierten Drehmomentsensor und/oder eines in das Hydrauliksystem integrierten Drucksensors zu einem Arbeitskennwert kombiniert werden.

Beispielsweise kann vorgesehen sein, dass Informationen, wie zum Beispiel die Fahrgeschwindigkeit, nicht durch einen an der Erntemaschine befindlichen Sensor ermittelt werden, sondern über definierte Schnittstellen z.B. vom Traktor und/oder dem Sensorsystem zur Erfassung der Ortsposition (GPS) dem Datenprozessor zur Verfügung gestellt werden. Die Kommunikation zwischen Zugmaschine und Erntemaschine kann beispielsweise über eine bekannte und in der Regel an der Erntemaschine bereits vorgesehene ISOBUS-Schnittstellen erfolgen.

Beispielsweise kann vorgesehen sein, dass im Datenprozessor auf Basis des vom zweiten Sensorsystem ermittelten Arbeits-Kennwertes eine Bewertung der Messwerte des ersten Systems erfolgt. In Abhängigkeit von dieser Bewertung kann dann die Einbeziehung und gegebenenfalls auch eine Gewichtung der Daten in die positionsbezogene Ertragserfassung erfolgen und so die Genauigkeit des Gesamtsystems optimiert werden.

Beispiele:
- MAXIMALLAST
   Ist der Detektionsbereich des ersten Sensorsystems vollständig mit Erntegut gefüllt und ist der Materialfluss entsprechend hoch (Arbeits-Kennwert = 100% + Fahrgeschwindigkeit >1km/h), erhalten die aktuellen Messwerte eine hohe Priorität und
   damit eine hohe Gewichtung in der Auswertung
- TEILLAST
   Ist der Detektionsbereich des ersten Sensorsystems teilweise mit Erntegut gefüllt und ist der Materialfluss durchschnittlich (Arbeits-Kennwert = 75% + Fahrgeschwindigkeit >1km/h), erhalten die aktuellen Messwerte eine mittlere Priorität und damit eine mittlere Gewichtung in der Auswertung
- MINIMALLAST
   Ist der Detektionsbereich des ersten Sensorsystems (20) teilweise mit Erntegut gefüllt und ist der Materialfluss minimal (Arbeits-Kennwert = 15% + Fahrgeschwindigkeit >1km/h), erhalten die aktuellen Messwerte eine geringe Priorität und damit eine geringe Gewichtung in der Auswertung
- STÖRFALL
   Ist der Detektionsbereich des ersten Sensorsystems (20) teilweise mit Erntegut gefüllt und ist der Materialfluss minimal (Arbeits-Kennwert = 75% + Fahrgeschwindigkeit =0km/h), kann davon ausgegangen werden, dass die aktuellen Messwerte fehlerhaft sind (Verstopfung / Überlast / Sensorfehler / etc.). Diese dürfen keinesfalls in die Auswertung einfließen.

Diese beschriebene Fall-Unterscheidung kann im Datenspeicher des Datenprozessors oder einer Steuerung beispielsweise in folgender Form hinterlegt sein:

| Arbeits-Kennwert (Zweites Sensorsystem) | Fahrgeschwindigkeit | Priorität/Gewichtung der aktuellen Messwerte |
|---|---|---|
| 100% | >1km/h | 100% |
| 75% | > 1km/h | 50% |
| 15% | >1km/h | 10% |
| 75% | =0km/h | ! FEHLER! |

Die Aktivierung beziehungsweise Deaktivierung des Sensorsystems zur Erfassung eines Erntegut-Inhaltsstoffes oder eines Erntegut-Merkmals basiert vorzugsweise auf einem binären Signal: Entweder ist das Sensorsystem angeschaltet oder ausgeschaltet. Das binäre Signal resultiert gegebenenfalls aus einem analogen Signal (bspw. bei Einsatz eines Drucksensors) und wird abhängig von einem Schwellwert definiert. Der Schwellwert kann gegebenenfalls vom Nutzer einstellbar sein. Insofern ist bezüglich des Arbeits-Kennwertes ein Schwellwert vordefiniert, dessen Über- oder Unterschreiten die Aktvierung beziehungsweise Deaktivierung des Sensorsystems bewirkt.

Alternativ zu einer physikalischen Deaktivierung, also einem An- oder Ausschalten des Sensorsystems, kann auch eine funktionale Deaktivierung des Sensorsystems erfolgen. Bei einer funktionalen Deaktivierung wird das Sensorsystem zur Erfassung der Inhaltsstoffe zwar nicht ausgeschaltet, die vom Sensorsystem ermittelten Messwerte werden jedoch, beispielsweise mittels eines entsprechend konfigurierten Computerprogramms, bei der weiteren Analyse im Datenprozessor dann nicht berücksichtigt, wenn der Arbeits-Kennwert den vordefinierten Schwellwert unterschreitet.

Wesentlich ist somit, dass der Datenprozessor zusätzlich zu den Daten:
- Ortsposition
- Gewicht
- Inhaltsstoff
die Information "der Ladewagen befindet sich im Ernteeinsatz" erhält und diese Information in die Analyse der Daten einbezieht.

Der Erfindung liegt also der Gedanke zugrunde, die Datenerfassungssysteme zur positionsbezogenen Ertragserfassung erst dann einzuschalten bzw. deren Daten erst dann auszuwerten, wenn durch eine weitere - zweite - Sensorvorrichtung der Arbeits-Kennwert "der Ladewagen befindet sich im Ernteeinsatz" detektiert wird.

Durch die Auswertung dieses Kennwertes und das Auslösen der Ertragserfassung bei Überschreiten des für den jeweiligen Kennwert vordefinierten Schwellwertes werden irrelevante Messwerte zumindest teilweise eliminiert. Hierdurch wird eine qualitativ bessere Grundlage zur Weiterverarbeitung der Daten geschaffen und eine verlässlichere Qualität der Ertragsberechnung erreicht.

Soweit der Arbeits-Kennwert auf einer Einrichtung zur Messung eines Antriebsparameters, beispielsweise der Antriebsleistung beruht, kann eine Drehmomentstütze oder eine Drehmoment-Messnabe vorgesehen sein, mittels derer ein in einem Antriebsstrang des Ladewagens gemessenen Drehmoment messbar ist. Die Drehmoment-Messnabe ist vorzugsweise in eine zwischen einer Zugmaschine des Ladewagens und dem Ladewagen selbst vorgesehene Zapfwellenanordnung integriert. Da Ladewagen in aller Regel einen mittels der Zapfwellenanordnung mechanisch angetriebenen Rotor zur Förderung und Zerkleinerung des Ernteguts aufweisen, steigt ein in der Zapfwellenanordnung gemessenes Drehmoment im Ernteeinsatz signifikant an. Überschreitet das Drehmoment einen vordefinierten Wert, wird das erste Sensorsystem (Sensorsystem zur Ermittlung eines Inhaltsstoffes) aktiviert.

In einer ergänzenden oder alternativen Ausführungsvariante der Erfindung kann der Arbeits-Kennwert zur Ermittlung eines Erntebetriebs-Zustandes, den das zweite Sensorsystem ermittelt, ein Druck sein, der durch das an einem hydraulisch angetriebenen Aggregat auftretende Drehmoment erzeugt wird. Dabei kann der hydraulische Druck über die Hydraulikölversorgung der Zugmaschine oder über eine am Ladewagen selbst vorgesehene Hydraulikpumpe, die durch die Zapfwellenanordnung des Ladewagens angetrieben sein kann, erzeugt werden. Bei einem Ladewagen mit hydraulisch angetriebenen Aggregaten, die im Ernteeinsatz aktiv sind, kann somit durch eine Druckmessung festgestellt werden, ob zu einem bestimmten Zeitpunkt Erntegut aufgenommen wird oder nicht. Dadurch wird auch bei einem hydrostatischen Antrieb der Erntegutaufnahmevorrichtung des Ladewagens vorteilhaft ein einfach zu messender Betriebsparameter des Ladewagens als Arbeits-Kennwert ausgewertet.

Zudem ist es denkbar, den Druck in einem Hydraulikzylinder, erzeugt durch eine von außen wirkende Kraft, zu erfassen und für die Ermittlung des Arbeits-Kennwertes zu nutzen. So ist beispielsweise der Druck in den sog. Schneidwerkszylindern, die das Schneidwerk in den Förderkanal schwenken und in Arbeitsposition halten, proportional zur Fördermenge. Damit sind direkte Rückschlüsse auf die aktuelle Auslastung des Ladewagens möglich.

Das zweite Sensorsystem kann auch nach einem optischen Wirkprinzip arbeiten. Bei einer solchen Ausführungsvariante können eine oder mehrerer Kameras oder eine oder mehrerer Lichtschranken vorgesehen sein. Dadurch können einfach und damit vorteilhaft weitere Arbeits-Kennwerte zur Auswertung ermittelt werden.

Bei Verwendung einer Kamera basiert der Arbeits-Kennwert auf einer Bildauswertung. Bei Verwendung einer Lichtschranke dient die Unterbrechung eines Lichtstrahls oder einer Anzahl von Lichtstrahlen (Lichtgitter) als Arbeits-Kennwert. Unter einem Lichtgitter werden mehrere vorzugsweise parallel oder senkrecht zueinander emittierte Lichtstrahlen verstanden. Mit einem Lichtgitter lässt sich eine größere Fläche überwachen als mit einem einfachen Lichtstrahl. Die Kamera beziehungsweise die Lichtschranke(-n) sind auf Bereiche ausgerichtet, die im Ernteeinsatz direkt oder indirekt durch den Erntegutstrom beeinflusst werden.

Unter einer direkten Beeinflussung wird der Erntegutstrom selbst verstanden. Es wird somit detektiert, ob an einer bestimmten Stelle im Bereich von Aufnahmeeinrichtung bis Laderaum Erntegut gefördert wird.

Unter einer indirekten Beeinflussung wird die Untersuchung von Einrichtungen verstanden, die beispielsweise im Ernteeinsatz eine andere Position haben, als dann, wenn der Ladewagen sich nicht im Ernteeinsatz befindet. Hierbei kann es sich beispielsweise um die Position eines für den Ausgleich des Erntegutstroms vorgesehenen Niederhalters handeln, der vom Erntegutstrom bewegt bzw. um eine Drehachse geschwenkt wird.

In einer bevorzugten Ausführungsvariante der Erfindung befindet sich die Position, an der der optische Sensor oder die Lichtschranke angeordnet ist, zwischen der Aufnahmevorrichtung und der Pressvorrichtung des Ladewagens. Als Pressvorrichtung eines Ladewagens wird allgemein ein Laderotor oder ein Ladeschwingen-System verstanden, mittels dessen das Erntegut nach seiner Aufnahme weiter in den Laderaum gefördert wird. Dadurch wird an einer vorteilhaft einfach zugänglichen Position eine direkte Messung des Erntegutstroms ermöglicht.

Weiterhin kann vorgesehen sein, dass die Messwerte des ersten Sensorsystems genutzt werden, um Funktionen an Arbeitsaggregaten des Ladewagens zu regulieren oder zu kalibrieren. Wenn beispielsweise das erste Sensorsystem eine Materialeigenschaft misst, die in Zusammenhang mit einer Maschineneinstellung steht, kann eine entsprechende, vorzugsweise automatische Regulierung vorgesehen sein, die den vom ersten Sensorsystem gelieferten Messwert nutzt. Wird beispielsweise mittels des ersten Sensorsystems der Feuchtigkeitsgehalt im Erntegut gemessen, und stellt sich bei kontinuierlichen Messungen heraus, dass die Feuchtigkeit des Ernteguts im Vergleich zu vorherigen Werten dauerhaft auf ein höheres Niveau angestiegen ist, so lässt sich hieraus der Rückschluss ableiten, dass auch das Schneiden des Ernteguts nunmehr schwerer ist als in trockeneren Verhältnissen. Dieser Rückschluss beruht auf dem bekannten Wissen, dass trockenes Erntegut in aller Regel brüchig ist und sich deshalb leichter schneiden lässt als nasses Erntegut. In dem Fall, in dem das zweite Sensorsystem auf einer Messung des Kraftbedarfs beruht und der Schwellwert, bei dessen Überschreitung das erste Sensorsystem aktiviert war, auf einen Wert eingestellt war, der für trockenes Erntegut relevant ist, kann somit dann, wenn vom ersten Sensorsystem geänderte Erntebedingungen festgestellt wurden, der Schwellwert zur Aktivierung des ersten Sensorsystems entsprechend nachjustiert werden.

In einer vorteilhaften Ausführung umfasst das erste Sensorsystem mehrere Einzelsensoren. Die mehreren Einzelsensoren können in einem gemeinsamen Gehäuse untergebracht sein, so dass aus den von den Einzelsensoren erfassten Inhaltsstoff-Daten ein Mittelwert gebildet werden kann, der sich auf die Position bezieht, an der das Gehäuse mit den mehreren Sensoren angebracht ist. Alternativ oder ergänzend können mehrere Sensoren auch an unterschiedlichen Positionen angebracht werden, so dass ein Mittelwert aus den an mehreren Positionen gemessenen Inhaltsstoffen gebildet werden kann. Beispielsweise ist es möglich, an der Stirnwand des Ladewagens je einen Sensor - oder je eine Gruppe von in einem Gehäuse zusammengefassten Einzelsensoren - an drei Positionen anzubringen, um so den Erntegutstrom an der linken Seite, der rechten Seite und in der Mitte zu messen und dann einen Mittelwert zu bilden. Durch Verwendung mehrerer Sensoren können Ausfälle von Sensoren und/oder Messfehler kompensiert werden.

Sensoren zur Messung einer Ernteguteigenschaft können überall dort angebracht sein, wo ein Kontakt mit dem Erntegut herstellbar ist. Insbesondere können die Sensoren unterhalb eines zwischen Rotor und Rotorwanne ausgebildeten Förderkanals, am Ende des Förderkanals oder an der Ladewagen-Stirnwand angebracht sein.

Die genannten Verfahren und Vorrichtungen basieren darauf, dass ein oder mehrere spezielle Sensoren zur Ermittlung der Inhaltsstoffe in den Ladewagen beziehungsweise in das Verfahren zum Betrieb des Ladewagens integriert werden. Besonders bevorzugt ist die Verwendung von Mikrowellensensoren, von Nah-Infrarot-Spektroskopie-Sensoren (NIRS-Sensoren) oder von Magnet-Resonanz-Tomographie-Sensoren (MRT-Sensoren).

Die beispielsweise verwendeten NIRS-Sensoren basieren auf einem chemometrischen Messverfahren, bei dem die zu vermessende Probe mit einer definierten Lichtquelle angestrahlt wird. Dabei wird nur ein Teil des Lichtes von der Probe absorbiert. Der nicht absorbierte Anteil wird reflektiert und vom NIRS-Sensor im Zusammenwirken mit einem angeschlossenen Rechner im Bereich des nahen Infrarots analysiert. Vor dem Hintergrund, dass bei einzelnen organischen Gruppen unterschiedliche Absorptionscharakteristika auftreten, die über einen breiten Wellenbereich charakteristische Reflexionsspektren aufweisen, können so Datensätze als Referenzdaten ermittelt werden, die bei der Durchführung des Verfahrens mit den vom NIRS-Sensor ermittelten Ist-Daten verglichen werden und Rückschlüsse auf die Bestimmung der interessierenden Parameter zulassen. Bei diesen Inhaltsstoffen kann es sich beispielsweise um die Feuchtigkeit, den Zuckergehalt oder den Stärkegehalt handeln.

Analog zur Analyse eines oder mehrerer Inhaltsstoffe mit NIRS-Sensoren sind auch andere Sensoren grundsätzlich einsetzbar, wenn diese geeignet sind, unter Ausnutzung physikalischer Eigenschaften der Erntegut-Komponenten deren Inhaltsstoffe zu analysieren. In Frage kommen insofern beispielsweise auch MRT-Sensoren, die auf dem Prinzip der Kernspinresonanz arbeiten.

Die erfindungsgemäße Aufgabe wird auch gelöst durch ein Verfahren zum Betrieb einer Erntemaschine, vorzugsweise eines Ladewagens, zur Ernte von Halm- und Blattgut der wenigstens eine Erntegutaufnahmevorrichtung, einen Laderaum, ein positionsbestimmendes System, beispielsweise ein GPS-System, ein Wiegesystem, ein erstes Sensorsystem zur Ermittlung wenigstens einer Erntegut-Eigenschaft oder eines Erntegut-Merkmals und einen Datenprozessor aufweist, welcher die positionsbestimmenden Daten, die Wiegedaten und die mit dem ersten Sensorsystem ermittelten Daten in einen Zusammenhang bringt und diese gewonnenen Daten aufbereitet und abspeichert, so dass eine positionsbezogene Ertragserfassung durchführbar ist. Bei dem erfindungsgemäßen Verfahren wird mittels eines zweiten Sensorsystems ein Arbeits-Kennwert ermittelt und die vom ersten Sensorsystem ermittelten Daten werden in Abhängigkeit von dem vom zweiten Sensorsystem ermittelten Arbeits-Kennwert in die positionsbezogene Ertragserfassung einbezogen. Hierdurch ist es möglich, die tatsächliche Erntesituation in die positionsbezogene Ertragskartierung einzubeziehen und beispielsweise nur dann durchzuführen, wenn momentan ein Erntegutfluss vorhanden ist. Ist der Gutsfluss unterbrochen, kann auch die positionsbezogene Ertragserfassung automatisch unterbrochen werden.

Weiterhin kann alternativ oder ergänzend zu einer Aktivierung / Deaktivierung der positionsbezogenen Ertragserfassung eine vorzugsweise gewichtete Einbeziehung von Sensordaten erfolgen.

In einer bevorzugten Ausgestaltung des Verfahrens wird das erste Sensorsystem in Abhängigkeit davon aktiviert, ob der mittels des zweiten Sensorsystems ermittelte Arbeits-Kennwert einen vorzugsweise veränderbaren Schwellwert überschreitet. Der Schwellwert ist somit an die jeweilige Erntesituation beziehungsweise an das jeweilige Erntegut anpassbar.

Alternativ zu einem eigenen positionsbestimmenden System kann der Ladewagen auch eine Schnittstelle zu einem positionsbestimmenden System eines ziehenden Fahrzeuges aufweisen. Wesentlich ist somit, dass Ortsposition des Ladewagens während des Ernteeinsatzes erfasst und für Analysezwecke, insbesondere die Erstellung einer Ertragskartierung, zur Verfügung steht.

Vorzugsweise werden die von Sensoren ermittelten Daten, insbesondere beispielsweise die Positionsdaten, die Wiegedaten und die mit dem ersten Sensorsystem ermittelten Inhaltsstoffdaten mittels eines Datenprozessors in einen Zusammenhang gebracht und analysiert, so dass auf Basis der Datenanalyse eine positionsbezogene Ertragserfassung des Ernteguts erfolgt.

Bei dem zur Aktivierung des ersten Sensorsystems vorgesehenen Arbeits-Kennwert kann es sich beispielsweise um ein Drehmoment, einen hydraulischen Druck oder eine optisch erfasste Information handeln. Zu dem Arbeits-Kennwert ist ein Schwellwert vordefiniert, bei dessen Über- oder Unterschreiten das erste Sensorsystem aktiviert oder deaktiviert wird. Vorzugsweise ist der Schwellwert veränderbar. Hierdurch wird eine Anpassung an individuelle Arbeits- beziehungsweise Erntebedingungen ermöglicht. So kann bespielweise bei leichten Erntebedingungen, die einen geringen Kraftbedarf der Antriebsorgane des Ladewagens erfordern, der Schwellwert auf einen relativ kleinen Wert, beispielsweise auf ein relativ kleines Drehmoment eingestellt werden und bei schweren Arbeitsbedingungen auf einen relativ großen Schwellwert.

Vorzugsweise ist die Anzahl der vom ersten Sensorsystem je Zeiteinheit durchzuführenden Inhaltsstoff-Bestimmungen einstellbar. Hierdurch kann die Datenerfassung an die Erntebedingungen und/oder die Analysegeschwindigkeit des ersten Sensorsystems angepasst werden. Eine Filterung der von den Sensoren detektierten Messwerte kann auch durch andere Verfahren, insbesondere durch Bildung von Mittelwerten oder Medianen, erfolgen.

Weiterhin ist es vorteilhaft, die Ermittlung der wenigstens einen Erntegut-Eigenschaft oder des Erntegut-Merkmals an den jeweiligen Messpositionen redundant und/oder an zwei oder mehr Positionen durchzuführen.

Im Idealfall ist das erste Sensorsystem so am Ladewagen angebracht, dass die Inhaltsstoff-Ermittlung an der Ortsposition erfolgt, an der das Erntegut von der Aufnahmevorrichtung aufgenommen wird. Aus funktionalen Gründen kann es jedoch sinnvoll sein, die Inhaltsstoff-Bestimmung zu einem späteren Zeitpunkt durchzuführen. Das erste Sensorsystem kann beispielsweise an der Stirnwand des Ladewagens angebracht sein. Da das Erntegut zu dem Zeitpunkt, an dem es an einem in der Stirnwand des Ladewagens integrierten Sensor vorbeigeführt wird, von einem beispielsweise 20 Meter zurückliegenden Ernteort stammt, stimmt die Ortspositon des Ladewagens im Moment der Inhaltsstoff-Analyse nicht mit der Ortsposition überein, an der das Erntegut mittels der Aufnahmevorrichtung vom Boden aufgenommen worden ist.

In einer speziellen Ausgestaltung des Verfahrens kann deshalb zur Berechnung der an einer Ortsposition erfassten Inhaltsstoff-Daten ein Korrekturfaktor einbezogen werden, der eine Zuordnung der erfassten Inhaltsstoffe zu derjenigen Position ermöglicht, an der das am ersten Sensorsystem vorbeigeführte Erntegut von der Aufnahmevorrichtung aufgenommen wurde. Der Korrekturfaktor ist vorzugsweise variabel und kann auf Erfahrungswerten und/oder Werten beruhen, die mittels spezieller Messungen vorab erfasst und im Datenprozessor, beispielsweise in tabellarischer Form hinterlegt sind. Weiterhin ist denkbar, die Berechnung der Ortsposition auf Basis der Fahrgeschwindigkeit sowie der Prozessgeschwindigkeit vorzunehmen.

Weitere vorteilhafte Ausführungen der Erfindung sind den Unteransprüchen zu entnehmen.

Nachfolgend wird die Erfindung anhand von Ausführungsbeispielen unter Bezug auf die Zeichnungen näher beschrieben, wobei auch weitere vorteilhafte Varianten und Ausgestaltungen diskutiert werden. Es sei betont, dass die nachfolgend diskutierten Ausführungsbeispiele die Erfindung nicht abschließend beschreiben sollen, sondern dass auch nicht dargestellte Varianten und Äquivalente realisierbar sind und unter die Ansprüche fallen. Es zeigt:
- Figur 1:: eine schematische Darstellung einer Erntemaschine in Form eines Ladewagens, der an einen Traktor gekuppelt ist;
- Figur 2:: eine Ausschnittsvergrößerung des Ladewagens aus Fig. 1 im Schnitt;
- Figur 3:: eine weitere Ausschnittsvergrößerung des Ladewagens aus Fig. 1 im Schnitt;
- Figur 4a:: eine räumliche Ansicht des Ladewagens aus Fig. 1;
- Figur 4b:: eine räumliche Ansicht des Achsaggregats des Ladewagens aus Fig. 1;
- Figur 5:: ein Prozessdiagramm des Betriebs des Ladewagens aus Fig. 1.

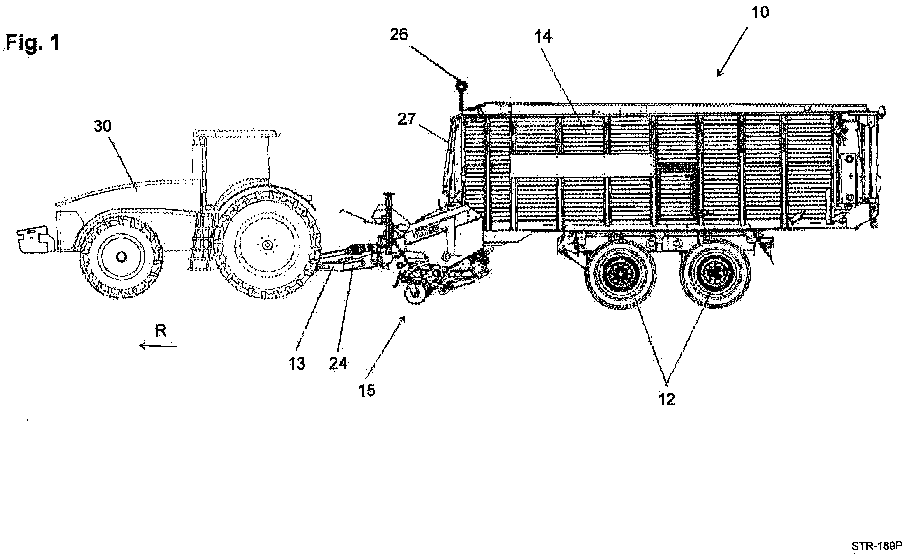

Fig. 1 zeigt ein Gespann, das von einem Ladewagen 10 und einem den Ladewagen 10 ziehenden Zugfahrzeug, hier einem Traktor 30, gebildet wird. Alternativ könnte an Stelle eines Ladewagens auch eine andere Erntemaschine zur Ernte von Halm- und Blattgut, beispielsweise eine Ballenpresse, vorgesehen sein. In diesem Fall wäre die Sensor- und Steuerungskonfiguration an diese andere Erntemaschine anzupassen.

Der Ladewagen 10 kann als Starrdeichselanhänger - wie z.B. als so genannter Tandemanhänger - ausgeführt sein und weist in dem Beispiel der Fig. 1 demnach ein Doppelachsaggregat 12 sowie eine Deichsel 13 auf. Die Deichsel 13 kann als sog. Knickdeichsel ausgeführt sein, wie sie bei Ladewagen vorzugsweise vorzufinden ist. Die Ausführung des Ladewagens 10 als Tandemanhänger ist vorteilhaft, jedoch nicht zwingend. Alternativ ist auch eine andere Anhängerausführung des Ladewagens 10 oder ein als Selbstfahrer ausgeführter Ladewagen möglich.

Der Ladewagen 10 weist weiterhin einen umbauten Laderaum 14 auf, der als Speicher für aufgenommenes Erntegut dient. Der Ladewagen 10 ist für Halm- und Blattgut - vorzugsweise für geschnittenes Gras - als Erntegut vorgesehen. Der Laderaum 14 kann mit einer Einrichtung zum stetigen und/oder unstetigen Fördern des Ernteguts - wie zum Beispiel einem sogenannten Kratzboden - zu einem in Bezug auf die Fahrtrichtung des Ladewagens 10 hinteren Bereich des Ladewagens 10 ausgerüstet sein. Darüber hinaus kann der Ladewagen 10 an seinem hinteren Bereich eine Einrichtung zur automatischen Entladung des Erntegutes, wie z.B. Verteilwalzen aufweisen.

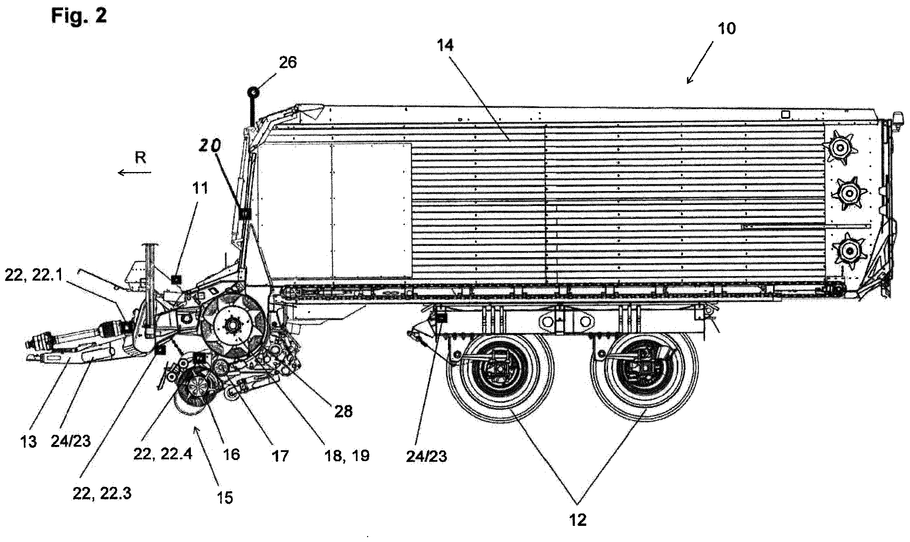

Der Ladewagen 10 weist darüber hinaus eine Erntegutaufnahmevorrichtung 15 auf, die in Fig. 2 dargestellt ist. Die Ernteaufnahmevorrichtung 15 kann eine Aufnahmevorrichtung - in der Fachsprache auch Pick-Up 16 genannt -, eine Fördertrommel 17 sowie eine Pressvorrichtung 18 mit einem Rotor 19 aufweisen. Um das Erntegut zu zerkleinern, kann die Pressvorrichtung 18 ein Schneidwerk aufweisen. Zum Schutz vor Fremdköpern kann die Erntegutaufnahmevorrichtung 15 mit einer Vorrichtung zur Erkennung von metallischen Fremdkörpern im Erntegutstrom ausgestattet sein. Vorzugsweise weist die Vorrichtung zur Erkennung von metallischen Fremdkörpern Magnete auf (hier nicht dargestellt), die metallische Fremdkörper aus dem Erntegutstrom entfernen, bevor die metallischen Fremdkörper das Schneidwerk erreichen und dort die Schneidmesser beschädigen. Die Vorrichtung zur Erkennung von metallischen Fremdkörpern kann auch anders als nach einem magnetischen Wirkprinzip arbeitend ausgeführt sein.

Da Erntegutaufnahmevorrichtungen aus dem Stand der Technik bekannt sind, wird hier auf eine detaillierte Beschreibung verzichtet und beispielsweise auf die Schrift DE 10 2016 103 108 A1 verwiesen.

Die Erntegutaufnahmevorrichtung 15 hat die Aufgabe, mit der unter der Vorderseite des Ladewagens 10 montierten geschobenen oder gezogenen Pick-up 16 Erntegut vom Boden aus aufzunehmen und, unterstützt von der Fördertrommel 17 und dem Rotor 19, durch einen Förderkanal 28 in den Laderaum 14 zu fördern. Das Erntegut wird durch die Pressvorrichtung 18 mit dem Rotor 19 verdichtet, optional durch das Schneidwerk geschnitten und schließlich in den Laderaum 14 gedrückt.

Die Ausführung der Erntegutaufnahmevorrichtung 15 nach der technischen Lehre der DE 10 2016 103 108 A1 ist vorteilhaft, jedoch nicht zwingend. Alternativ kann die Erntegutaufnahmevorrichtung 15 auch anders ausgeführt sein. Beispielsweise kann an Stelle des Rotors 19 ein Schwingenförderer (nicht dargestellt) vorgesehen sein. Die Teilfunktionen der Erntegutaufnahmevorrichtung 15, nämlich das Aufnehmen, Weiterfördern, optionale Schneiden, Verdichten und das Weiterfördern des Erntegutes in den Laderaum 14 des Ladewagens 10 können somit auf verschiedene Weisen erfolgen.

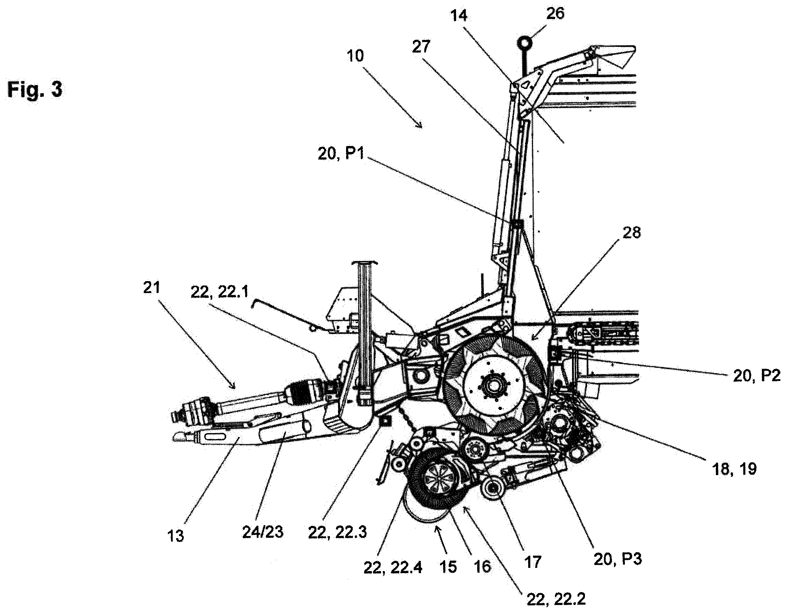

In Fig. 3 ist die Erntegutaufnahmevorrichtung 15 vergrößert dargestellt. Erkennbar ist ein erstes Sensorsystem 20 zur Ermittlung wenigstens einer/ eines Erntegut-Eigenschaft oder-Merkmals. Zur Veranschaulichung ist die Anbringung des ersten Sensorsystems 20 an drei Positionen P1, P2 und P3 dargestellt.

In Position P1 sind drei erste Sensorsysteme 20 an einer Stirnwand 27 angebracht. Die Stirnwand 27 begrenzt den Laderaum 14 in Bezug auf eine Vorwärtsfahrtrichtung R des Ladewagens 10 nach vorne hin.

Alternativ oder ergänzend kann das erste Sensorsystem 20 auch in einer Position P2 am Ende des Förderkanals 28 oder in einer Position P1 im vorderen Bereich des Förderkanals angeordnet sein.

Das erste Sensorsystem 20 kann als Sensorsystem zur Messung der Feuchte und/oder zur Messung anderer Eigenschaften, Merkmale oder Inhaltsstoffe des Erntegutes vorgesehen sein, die für eine Ertragserfassung des Erntegutes relevant sind.

Das erste Sensorsystem 20 umfasst im dargestellten Ausführungsbeispiel einen oder mehrere Nahinfrarotspektroskopie-Sensor(en) - oder kurz: NIRS-Sensoren. Alternativ kann das erste Sensorsystem 20 auch Sensoren aufweisen, die nach einem anderen Wirkprinzip arbeiten.

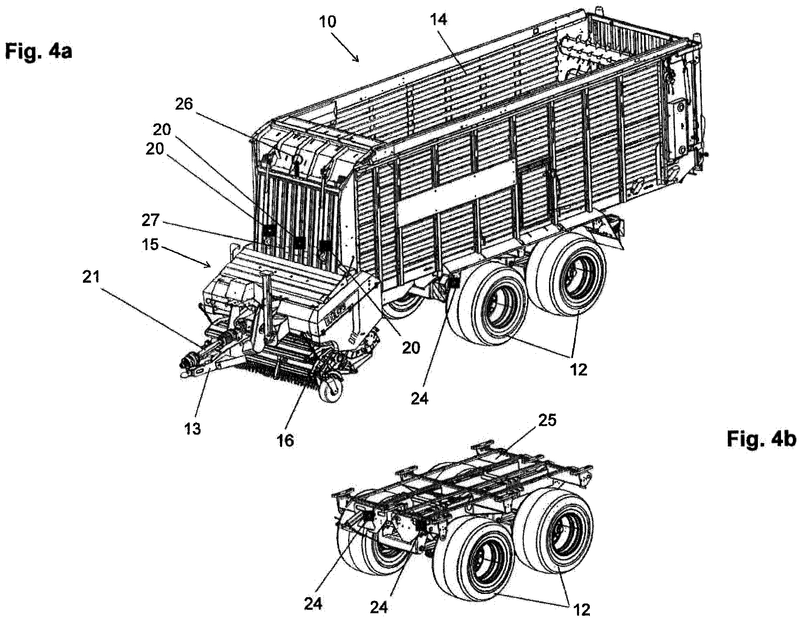

Die Ermittlung der Erntegut-Eigenschaften durch das erste Sensorsystems 20 kann durch die Ermittlung redundanter Daten und/oder durch Ermittlung paralleler Daten an unterschiedlichen Stellen erfolgen. Das von der Pressvorrichtung 18 in den Laderaum 14 geförderte Erntegut steigt zunächst an der Stirnwand 27 entlang im Laderaum 14 auf. Die Sensorvorrichtungen 20 sind so an der Stirnwand 27 angebracht, dass das in den Laderaum 14 aufsteigende Erntegut an einer Kontaktfläche der NIRS-Sensoren entlanggleitet. Unter einer parallelen Datenerfassung wird das Messen von Ernteguteigenschaften an unterschiedlichen Stellen bzw. mit mehreren ersten Sensorsystemen 20 verstanden. Eine solche parallele Datenerfassung ist in Figur 4a dargestellt. Dort ermitteln drei in der Stirnwand, also in Position P3 angebrachte erste Sensorsysteme 20, die Ernteguteigenschaft in den beiden Seitenbereichen und in der Mitte des Erntegutstroms.

Unter einer redundanten Datenerfassung wird die Datenermittlung mit mehreren Sensoren in einem gemeinsamen Gehäuse verstanden.

Sowohl bei der parallelen als auch bei der redundanten Erfassung von Daten durch die Sensoren kann eine Mittelwertbildung der ermittelten Erntegut-Eigenschaft(en) erfolgen. Hierdurch lassen sich Fehler minimieren und/oder unplausibel Sensorwerte identifiziert und gegebenenfalls eliminieren.

Der Ladewagen 10 kann mit einem positionsbestimmenden System, beispielsweise einem GPS-System 26 ausgerüstet sein, so dass die Positionsdaten des Ladewagens 10 erfasst werden. Alternativ kann auch der Traktor 30 mit einem GPS-System ausgerüstet sein, welches Positionsdaten des Ladewagens 10 erfasst und die ermittelten Daten an einen Datenprozessor 11 des Ladewagens 10 übermittelt.

Der Antrieb der angetriebenen Einrichtungen des Ladewagens 10 erfolgt durch eine mechanische und/oder hydraulische und/oder elektrische Kopplung des Ladewagens 10 an den Traktor 30. Die mechanische Kopplung umfasst eine Zapfwellenanordnung 21. Die Zapfwellenanordnung 21 kann über ein mechanisches Getriebe auf die Pick-up 16, die Fördertrommel 17, die Pressvorrichtung 18, den Rotor 19, den Kratzboden und die Verteilwalzen wirken. Alternativ kann die Zapfwellenanordnung 21 auch auf eine Hydraulikpumpe eines oder mehrerer hydrostatisches/er Getriebe, bestehend aus einer zentralen Hydraulikpumpe und wenigstens einem, vorzugsweise mehreren Hydraulikmotor(en) wirken.

Die Zapfwellenanordnung 21 umfasst hier einen Lagerbock, der auf der Deichsel 13 angeordnet ist. Die Zapfwellenanordnung 21 umfasst im dargestellten Ausführungsbeispiel mehrere Gelenkwellen mit entsprechenden Gelenken und ist durch geeignete Mittel mit einer Zapfwelle des Traktors 30 verbunden einem Eingangszapfen des mechanischen Getriebes oder der Hydraulikpumpe des Ladewagens 10 verbunden.

Erfindungsgemäß wird das erste Sensorsystem 20 dann aktiviert, wenn der Ladewagen 10 sich im Ernteeinsatz befindet und Erntegut vom Boden aufnimmt. Ob sich der Ladewagen 10 im Ernteeinsatz befindet, wird mit einem zweiten Sensorsystem 22 detektiert. Als Messgrößen kommen grundsätzlich alle Parameter in Betracht, die einen Rückschluss darauf ermöglichen, dass sich der Ladewagen im Ernteeinsatz befindet.

In Betracht kommen insbesondere:
- Ein zweites Sensorsystem 22 in Form einer Drehmomentstütze oder einer Messnabe 22.1 zur Messung eines Drehmoments an einem der mechanisch angetriebenen Aggregate. Als Drehmomentstütze kann ein vorgespannter Hydraulikzylinder mit Drucksensor diesen. Drehmomentstütze und Messnabe sind für den Einsatz als zweites Sensorsystem gleich gut geeignet, jedoch ist die Verwendung einer Drehmomentstütze in der Regel kostengünstiger.
- Ein zweites Sensorsystem 22 in Form eines Drucksensors 22.2 zur Messung eines Drucks in der Hydraulikanlage.
- Ein zweites Sensorsystem 22 in Form einer Kamera 22.3 mittels derer an geeigneter Stelle die Erntegutaufnahme oder die Aktivität von mit der Erntegutaufnahme in Zusammenhang stehenden Bauteilen des Ladewagens 10 überwacht wird.
- Ein zweites Sensorsystem 22 in Form einer Lichtschranke oder eines Lichtgitters (Lichtvorhang) 22.4 mittels derer ebenfalls an geeigneter Stelle die Erntegutaufnahme oder die Aktivität von mit der Erntegutaufnahme in Zusammenhang stehenden Bauteilen des Ladewagens 10 überwacht wird.
- Ein zweites Sensorsystem 22 in Form eines Winkelmessers, mit dem die Bewegung eines Erntegut-Aggregats um einen Drehwinkel gemessen wird.

Alle in Betracht kommenden zweiten Sensorsysteme 22 sind dazu vorgesehen, einen Arbeits-Kennwert zur Ermittlung eines Erntebetriebs-Zustandes zu bestimmen.

Ein Arbeits-Kennwert im Sinne der vorliegenden Erfindung ist ein Parameter oder ein Merkmal des Ladewagens 10, den der Ladewagen 10 während seines bestimmungsgemäßen Betriebs - nämlich während des Aufnehmens, des Weiterförderns, des optionalen Schneidens, des Verdichtens und des Weiterförderns des Erntegutes in den Laderaum 14 des Ladewagens 10 - aufweist und der messbar bzw. sensierbar ist.

Dies kann z.B. - im Falle eines mechanischen Getriebes, das von der Zapfwellenanordnung 21 angetrieben wird - ein Drehmoment sein, dass die Zapfwellenanordnung 21 führt und mit der Messnabe 22.1 gemessen wird. Wenn die Erntegutaufnahmevorrichtung 15 sich im Ernteeinsatz befindet und somit eine nennenswerte Menge des Erntegutes in den Laderaum 14 des Ladewagens 10 fördert, steigt dieses Drehmoment an. Bei Überschreiten eines vordefinierten Schwellwertes wird mittels geeigneter Einrichtungen von der zweiten Sensorsystem 22 ein Signal generiert, welches direkt oder indirekt die erste Sensorsystem 20 aktiviert.

Alternativ kann ein Arbeits-Kennwert auch mit einem zweiten Sensorsystem 22 ermittelt werden, welches ein Drucksensor 22.2 umfasst. Die Position des Drucksensors 22.2 befindet sich an geeigneter Stelle im hydraulischen Antriebssystem des Ladewagens 10. In Figur 3 ist angedeutet, dass der Drucksensor 22.2 in den hydraulischen Antrieb der Pick-up 16 integriert ist und dort einen Momentandruck misst, den die Hydraulikpumpe erzeugt, wenn die Erntegutaufnahmevorrichtung 15 sich in einem Arbeitszustand befindet, also eine nennenswerte Menge des Erntegutes in den Laderaum 14 des Ladewagens 10 fördert.

In einer weiteren alternativen Ausführungsform kann das zweite Sensorsystem 22 auch nach einem optischen Wirkprinzip arbeiten. Das zweite Sensorsystem 22 kann in dem Fall z.B. in Form einer oder mehrerer Kamera(s) 22.3 oder einer oder mehrerer Lichtschranke(n) 22.4 realisiert sein, mit der beispielsweise die Bewegung des Ernteguts an einer definierten Position am Ladewagen 10 sensiert wird. Vorzugsweise befindet sich diese Position zwischen der Pick-up 16 und der Pressvorrichtung 18 mit dem Rotor 19 (vgl. Fig. 3).

Der Ladewagen 10 weist ferner ein Wiegesystem 23 auf (siehe Fig. 4). Das Wiegesystem 23 arbeitet vorzugsweise nach dem Prinzip der elastischen Dehnung und der daraus resultierenden mechanischen Spannung in einem Werkstoff. Dazu ist der Laderaum 14 mit in einer Anzahl von beispielsweise vier oder sechs Wiegebolzen 24 auf einem Fahrgestell 25 gelagert, an dem das Doppelachsaggregat 12 vorzugsweise über Federlenker geführt ist. Ein weiterer Wiegebolzen ist im Bereich der Deichsel 13 befestigt. An den Wiegebolzen 24 sind Spannungs-Dehnungsmesstreifen appliziert, die die lokale Dehnung in den Wiegebolzen 24 messen, die zu einer lokalen mechanischen Spannung in den Wiegebolzen 24 führt. Bei bekanntem E-Modul des Werkstoffs, aus dem die Wiegebolzen 24 hergestellt sind, kann so auf die momentane Masse des Erntegutes geschlossen werden, das sich im Laderaum 14 des Ladewagens 10 befindet. Vorzugsweise sind die Wiegebolzen 24 aus einem Stahlwerkstoff hergestellt. Alternativ kann das Wiegesystem 23 auch nach einem anderen Wirkprinzip arbeiten.

Der Ladewagen 10 weist einen Datenprozessor 11 auf. Der Datenprozessor 11 steht mit dem ersten Sensorsystem 20, dem positionsbestimmenden GPS-System 26, dem Wiegesystem 23 und dem zweiten Sensorsystem 22 in Wirkverbindung. Der Datenprozessor 11 bringt die positionsbestimmenden Daten, die Wiegedaten und die mit dem ersten Sensorsystem 20 ermittelten Daten in einen Zusammenhang und bereitet diese gewonnenen Daten auf und speichert diese Daten ab, so dass mit dem Ladewagen 10 eine positionsbezogene Ertragserfassung durchführbar ist.

In dem Datenprozessor 11 ist erfindungsgemäß ein definierter Schwellwert des von dem zweiten Sensorsystem 22 ermittelten Arbeits-Kennwertes des Ladewagens 10 hinterlegt, so dass die positionsbezogene Ertragserfassung in Abhängigkeit des von der zweiten Sensorvorrichtung 22 bestimmten Arbeits-Kennwertes aktivierbar ist. Alternativ zu einem einzigen Schwellwert kann auch eine Tabelle mit Schwellwerten für unterschiedliche Erntegüter hinterlegt sein.

Durch Übermittlung eines Signals, welches bei, beziehungsweise durch Überschreiten des Schwellwertes erzeugt wird, wird das erste Sensorsystem 20 und damit die positionsbezogene Ertragserfassung vorteilhaft erst dann gestartet, wenn sich die Erntegutaufnahmevorrichtung 15 in einem Arbeitszustand befindet, also eine nennenswerte Menge des Erntegutes in den Laderaum 14 des Ladewagens 10 fördert.

Vorzugsweise ist der Schwellwert des Arbeits-Kennwertes veränderbar und kann z.B. durch eine Dateneingabeeinrichtung dem Datenprozessor individuell vorgegeben werden.

Fällt der durch das zweite Sensorsystem 22 ermittelte beziehungsweise bestimmte Arbeits-Kennwert unter den definierten Schwellwert, wird die positionsbezogene Ertragserfassung deaktiviert. Dadurch wird eine fehlerhafte Ertragserfassung - wie sie sich beispielsweise bei Wendemanövern des Ladewagens 10 ergeben könnten - vorteilhaft unterbunden.

Der Datenprozessor 11 kann ferner dafür ausgelegt sein, die Ermittlung wenigstens einer/ eines Erntegut-Eigenschaft oder-Merkmals durch das erste Sensorsystem 20 in einer einstellbaren Anzahl je Zeiteinheit durchzuführen. Dadurch kann das erste Sensorsystem 20 vorteilhaft den jeweiligen Ernte- und/oder Auswertbedingungen angepasst werden. Weiterhin kann vorgesehen sein, dass der Datenprozessor zu den von den Sensoren übermittelten Messwerten Mittelwerte oder Mediane bildet um so Messfehler zu bereinigen und/oder Messspitzen zu glätten.

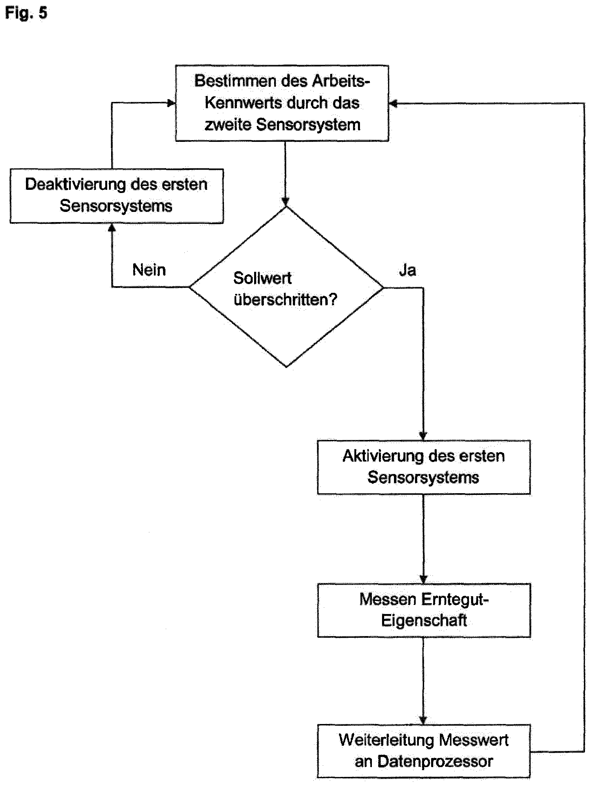

Figur 5 zeigt das erfindungsgemäße System in Form eines Regelkreises. Nach Aktivierung des Gesamtsystems wird kontinuierlich überwacht, ob aktuell Erntegut aufgenommen und verarbeitet wird. Die Aktivierung des Gesamtsystems kann beispielsweise durch einen Ein/Ausschalter am Steuergerät des Ladewagens erfolgen.

Ist das Gesamtsystem aktiviert, ist auch das zweite Sensorsystem 22 aktiv und misst kontinuierlich, beispielsweise mit einer Frequenz von einer Messung pro Sekunde, den vordefinierten Arbeits-Kennwert, also beispielsweise einen Druck, eine Position, einen Drehwinkel, eine Bildfolge etc. Der gemessene Arbeits-Kennwert wird mit einem vordefinierten Schwellwert abgeglichen.

Überschreitet der Arbeits-Kennwert den Schwellwert, wird das erste Sensorsystem 20 aktiviert beziehungsweise eine gegebenenfalls schon bestehende Aktivierung aufrechterhalten. Das erste Sensorsystem 20 misst dann die vordefinierte Ernteguteigenschaft und leitet den Messwert an den Datenprozessor 11 weiter.

Unterschreitet der Arbeits-Kennwert den Schwellwert, wird das erste Sensorsystem 20 deaktiviert, beziehungsweise eine gegebenenfalls bestehende Deaktivierung wird aufrechterhalten.

Um ein zu häufiges Aktivieren und Deaktivieren des ersten Sensorsystems zu vermeiden, kann eine Schaltverzögerung implementiert sein. Mit einer solchen Schaltverzögerung kann beispielsweise vorgegeben werden, dass eine Aktivierung bzw. Deaktivierung nur dann erfolgt, wenn eine Schwellwert Über- oder Unterschreitung von beispielsweise mehr als 10% vorliegt oder die Über- oder Unterschreitung die Dauer eines vordefinierten Zeitraums von beispielsweise mehr als 3 Sekunden überschreitet.

### Bezugszeichenliste:

- 10: Ladewagen
- 11: Datenprozessor
- 12: Doppelachsaggregat
- 13: Deichsel
- 14: Laderaum
- 15: Erntegutaufnahmevorrichtung
- 16: Pick-up
- 17: Fördertrommel
- 18: Pressvorrichtung
- 19: Rotor
- 20: erstes Sensorsystem
- 21: Zapfwellenanordnung
- 22: zweites Sensorsystem
- 22.1: Messnabe
- 22.2: Drucksensor
- 22.3: Kamera
- 22.4: Lichtschranke / Lichtgitter
- 23: Wiegesystem
- 24: Wiegebolzen
- 25: Fahrgestell
- 26: GPS-System
- 27: Stirnwand
- 28: Förderkanal
- 29: -
- 30: Traktor (Zugfahrzeug)

- R: Vorwärts-Fahrtrichtung
- P1: Position 1
- P2: Position 2
- P3: Position 3

## Patentansprüche

1. Erntemaschine, vorzugsweise Ladewagen (10), zur Ernte von Halm- und Blattgut, wenigstens aufweisend:
- eine Erntegutaufnahmevorrichtung (15),
- einen Laderaum (14) als Speicher für das aufgenommene Erntegut,
- ein positionsbestimmendes System, beispielsweise ein GPS-System (26) oder eine Schnittstelle zu einem positionsbestimmenden System eines den Ladewagen ziehenden Zugfahrzeuges (30),
- ein Wiegesystem (23),
- ein erstes Sensorsystem (20) zur Ermittlung wenigstens einer Erntegut-Eigenschaft oder eines Erntegut-Merkmals sowie
- einen Datenprozessor (11), konfiguriert zur Durchführung einer positionsbezogenen Ertragserfassung,
- ein zweites Sensorsystem (22) zur Ermittlung eines Arbeits-Kennwertes eines Erntebetriebs-Zustandes, so dass die positionsbezogene Ertragserfassung in Abhängigkeit des von der zweiten Sensorvorrichtung (22) bestimmten Arbeits-Kennwertes aktivierbar ist, wobei das zweite Sensorsystem (22) einen optischen Sensor (22.3) umfasst, so dass der Arbeits-Kennwert zur Ermittlung eines Erntebetriebs-Zustandes, den das zweite Sensorsystem (22) ermittelt, ein Bild oder eine Folge von Bildern ist,
**dadurch gekennzeichnet, dass** die Erntemaschine eine Pressvorrichtung (18) umfasst und ein vom optischen Sensor (22.3) und/oder einem Lichtschranken-Sensor (22.4) überwachtes Detektionsfeld zwischen der Aufnahmevorrichtung (16) und der Pressvorrichtung (18) angeordnet ist.

2. Erntemaschine nach Anspruch 1, **dadurch gekennzeichnet, dass** das zweite Sensorsystem (22) eine Vielzahl von parallelen Lichtschranken-Sensoren (22.4) umfasst, so dass der Arbeits-Kennwert zur Ermittlung eines Erntebetriebs-Zustandes, den das zweite Sensorsystem (22) ermittelt, ein Signal oder eine Signalunterbrechung ist.

3. Erntemaschine nach einem der vorgenannten Ansprüche, **dadurch gekennzeichnet, dass** das erste Sensorsystem (20) mehrere Einzelsensoren zur zeitgleichen Ermittlung wenigstens einer Erntegut-Eigenschaft oder eines Erntegut-Merkmals aufweist, so dass auf Basis mehrerer Messwerte ein positionsbezogener Mittelwert bestimmbar ist.

4. Erntemaschine nach Anspruch 3, **dadurch gekennzeichnet, dass** das erste Sensorsystem (20) wenigstens einen oder mehrere Nahinfrarotspektroskopie-Sensoren und/oder einen oder mehrere Mikrowellensensoren umfasst.

5. Verfahren zum Betrieb einer Erntemaschine, vorzugsweise eines Ladewagens (10), die zur Ernte von Halm- und Blattgut einsetzbar ist, wenigstens aufweisend:
- eine Erntegutaufnahmevorrichtung (15),
- einen Laderaum (14) als Speicher für das aufgenommene Erntegut,
- ein positionsbestimmendes System, beispielsweise ein GPS-System (26) oder eine Schnittstelle zu einem positionsbestimmenden System eines den Ladewagen ziehenden Zugfahrzeuges (30),
- ein Wiegesystem (23),
- ein erstes Sensorsystem (20) zur Ermittlung wenigstens einer Erntegut-Eigenschaft oder eines Erntegut-Merkmals, sowie
- einen Datenprozessor (11), welcher die positionsbestimmenden Daten, die Wiegedaten und die mit dem ersten Sensorsystem (20) ermittelten Daten in einen Zusammenhang bringt und diese gewonnenen Daten aufbereitet und abspeichert, so dass eine positionsbezogene Ertragserfassung erfolgt,
- mittels eines zweiten Sensorsystems (22) ein Arbeits-Kennwert ermittelt wird und die positionsbezogene Ertragserfassung bei Überschreiten eines vordefinierten Schwellwertes aktiviert wird,
**dadurch gekennzeichnet, dass** die vom ersten Sensorsystem (20) ermittelten Daten in Abhängigkeit von dem vom zweiten Sensorsystem (22) ermittelten Arbeits-Kennwertes in die positionsbezogene Ertragserfassung einbezogen werden, wobei im Datenprozessor (11) auf Basis des vom zweiten Sensorsystems (22) ermittelten Arbeitskennwertes eine Bewertung der vom ersten Sensorsystem (20) ermittelten Messwerte erfolgt, so dass die Genauigkeit des Gesamtsystems optimiert wird.

6. Verfahren zum Betrieb einer Erntemaschine nach Anspruch 5, **dadurch gekennzeichnet, dass** in Abhängigkeit von der Bewertung der vom ersten Sensorsystem ermittelten Daten die Einbeziehung und Gewichtung der Daten in der positionsbezogenen Ertragskartierung erfolgt.

7. Verfahren zum Betrieb einer Erntemaschine nach Anspruch 5 oder 6, **dadurch gekennzeichnet, dass** der Schwellenwert, bei dessen Überschreiten die positionsbezogene Ertragserfassung aktiviert wird, veränderbar ist.

8. Verfahren zum Betrieb einer Erntemaschine nach einem der Ansprüche 5 bis 7, **dadurch gekennzeichnet, dass** die positionsbezogene Ertragserfassung deaktiviert wird, wenn der durch das zweite Sensorsystem (22) ermittelte Arbeits-Kennwert unter den definierten Schwellwert fällt.

9. Verfahren zum Betrieb einer Erntemaschine nach einem der Ansprüche 5 bis 8, **dadurch gekennzeichnet, dass** der Datenprozessor (11) die Ermittlung der wenigstens einen Erntegut-Eigenschaft oder des Erntegut-Merkmals durch das erste Sensorsystem (20) in einer einstellbaren Anzahl je Zeiteinheit durchführt.

10. Verfahren zum Betrieb einer Erntemaschine nach einem der Ansprüche 5 bis 9, **dadurch gekennzeichnet, dass** die Ermittlung der wenigstens einen Erntegut-Eigenschaft oder des Erntegut-Merkmals durch das erste Sensorsystem (20) redundant an zwei oder mehr Positionen erfolgt.

11. Verfahren zum Betrieb einer Erntemaschine nach einem der Ansprüche 5 bis 10, **dadurch gekennzeichnet, dass** ein an einer Position angeordnetes Sensorsystem (20) wenigstens zwei Einzelsensoren (20.1; 20.2; 20.3; 20.4) umfasst.

12. Verfahren zum Betrieb einer Erntemaschine nach einem der Ansprüche 5 bis 11, **dadurch gekennzeichnet, dass** zur Berechnung der an einer Ortsposition erfassten Inhaltsstoff-Daten ein Korrekturfaktor einbezogen wird, der eine Zuordnung der erfassten Inhaltsstoffe zu derjenigen Position ermöglicht, an der das am ersten Sensorsystem (20) vorbeigeführte Erntegut von der Aufnahmevorrichtung (16) aufgenommen wurde.

## Claims

1. A harvesting machine, preferably a loader wagon (10), for harvesting stalk and leaf material, comprising at least:
- a crop pick-up device (15),
- a loading space (14) for storing the harvested material,
- a position-determining system, for example a GPS system (26) or an interface to a position-determining system of a towing vehicle (30) pulling the loader wagon,
- a weighing system (23),
- a first sensor system (20) for determining at least one crop property or crop characteristic,
and
- a data processor (11) configured to perform position-based yield recording,
- a second sensor system (22) for determining an operating characteristic of a harvesting operating state, so that the position-based yield recording can be activated depending on the operating characteristic determined by the second sensor system (22), wherein the second sensor system (22) comprises an optical sensor (22.3), such that the operating characteristic for determining a harvesting operation state, which is determined by the second sensor system (22), is an image or a series of images,
**characterized in that** that the harvesting machine comprises a pressing device (18) and a detection field monitored by the optical sensor (22.3) and/or a light barrier sensor (22.4) and/or a light barrier sensor (22.4) is arranged between the pick-up (16) and the pressing device (18).

2. The harvesting machine as claimed in claim 1, **characterized in that** the second sensor system (22) comprises a plurality of parallel photoelectric sensors (22.4), such that the operating characteristic for determining a harvesting operation state determined by the second sensor system (22) is a signal or a signal interruption.

3. The harvesting machine according to any one of the aforementioned claims, **characterized in that** the first sensor system (20) has a plurality of individual sensors for the simultaneous determination of at least one crop property or a crop characteristic, so that a position-based mean value can be determined on the basis of a plurality of measured values.

4. The harvesting machine as claimed in claim 3, **characterized in that** the first sensor system (20) comprises at least one or more near-infrared spectroscopy sensors and/or one or more microwave sensors.

5. A method for operating a harvesting machine, preferably a loader wagon (10), which can be employed for harvesting stalk and leaf material, comprising at least:
- a crop pick-up device (15),
- a loading space (14) for storing the harvested material,
- a position-determining system, for example a GPS system (26) or an interface to a position-determining system of a towing vehicle (30) pulling the loader wagon,
- a weighing system (23),
- a first sensor system (20) for determining at least one crop property or crop characteristic,
and
- a data processor (11), which correlates the position-determining data, the weighing data and the data determined with the first sensor system (20) and processes and stores this obtained data, so that a position-based yield recording is obtained,
- by means of a second sensor system (22) an operating characteristic is determined and the position-based yield recording is activated when a pre-defined threshold value is exceeded,
**characterized in that** the data determined by the first sensor system (20) are included in the position-based yield recording as a function of the operating characteristic determined by the second sensor system (22), wherein in the data processor (11) an evaluation is carried out of the measured values determined by the first sensor system (20) on the basis of the operating characteristic determined by the second sensor system (22), so that the accuracy of the overall system is optimized.

6. The method for operating a harvesting machine as claimed in claim 5, **characterized in that**, depending on the evaluation of the data determined by the first sensor system, the inclusion and weighting of the data in the position-based yield mapping is carried out.

7. The method for operating a harvesting machine as claimed in claim 5 or 6, **characterized in that** the threshold value, above which the position-based yield recording is activated, can be varied.

8. The method for operating a harvesting machine as claimed in any one of claims 5 to 7, **characterized in that** the position-based yield recording is deactivated when the operating characteristic determined by the second sensor system (22) falls below the defined threshold value.

9. The method for operating a harvesting machine according to any one of claims 5 to 8, **characterized in that** the data processor (11) carries out the determination of the at least one crop property or the crop characteristic by the first sensor system (20) in an adjustable number per unit time.

10. The method for operating a harvesting machine according to any one of claims 5 to 9, **characterized in that** the determination of the at least one crop property or the crop characteristic by the first sensor system (20) is performed redundantly at two or more positions.

11. The method for operating a harvesting machine according to any one of claims 5 to 10, **characterized in that** a sensor system (20) arranged at a position comprises at least two individual sensors (20.1; 20.2; 20.3; 20.4).

12. The method for operating a harvesting machine according to any one of claims 5 to 11, **characterized in that,** for calculating the contents data detected at a location position, a correction factor is included which enables the detected contents data to be assigned to the position at which the crop material passing the first sensor system (20) was picked up by the pick-up (16).

## Revendications

1. Récolteuse, de préférence chargeuse (10), pour la récolte de produits à tige et à feuille, comprenant au moins :
- un dispositif de réception de produit récolté (15),
- un espace de chargement (14) faisant office
d'endroit de stockage pour le produit récolté réceptionné,
- un système de détermination de position, par exemple un système GPS (26) ou une interface avec un système de détermination de position d'un véhicule tracteur (30) qui tracte la chargeuse,
- un système de pesage (23),
- un premier système de capteurs (20) destiné à identifier au moins une première propriété de produit récolté ou une caractéristique de produit récolté ainsi
- qu'un processeur de données (11), configuré pour réaliser une acquisition de rendement en rapport avec la position,
- un deuxième système de capteurs (22) destiné à identifier une valeur caractéristique de travail d'un état de régime de récolte, de sorte que l'acquisition de rendement en rapport avec la position peut être activée en fonction de la valeur caractéristique de travail déterminée par le deuxième système de capteurs (22), le deuxième système de capteurs (22) comportant un capteur optique (22.3), de sorte que la valeur caractéristique de travail destinée à identifier un état de régime de récolte, qu'identifie le deuxième système de capteurs (22), est une image ou une séquence d'images,
**caractérisée en ce que** la récolteuse comporte un dispositif de pressage (18) et un champ de détection, surveillé par le capteur optique (22.3) et/ou un capteur à barrière photoélectrique (22.4), est disposé entre le dispositif de réception (16) et le dispositif de pressage (18).

2. Récolteuse selon la revendication 1, **caractérisée en ce que** le deuxième système de capteurs (22) comporte une pluralité de capteurs à barrière photoélectrique (22.4) parallèles, de sorte que la valeur caractéristique de travail destinée à identifier un état de régime de récolte, qu'identifie le deuxième système de capteurs (22), est un signal ou une interruption de signal.

3. Récolteuse selon l'une des revendications précédentes, **caractérisée en ce que** le premier système de capteurs (20) possède plusieurs capteurs individuels destinés à identifier simultanément au moins une propriété de produit récolté ou une caractéristique de produit récolté, de sorte qu'une valeur moyenne en rapport avec la position peut être déterminée sur la base de plusieurs valeurs mesurées.

4. Récolteuse selon la revendication 3, **caractérisée en ce que** le premier système de capteurs (20) comporte au moins un ou plusieurs capteurs de spectroscopie dans le proche infrarouge et/ou un ou plusieurs capteurs à hyperfréquences.

5. Procédé pour faire fonctionner une récolteuse, de préférence une chargeuse (10), pour la récolte de produits à tige et à feuille, comprenant au moins :
- un dispositif de réception de produit récolté (15),
- un espace de chargement (14) faisant office d'endroit de stockage pour le produit récolté réceptionné,
- un système de détermination de position, par exemple un système GPS (26) ou une interface avec un système de détermination de position d'un véhicule tracteur (30) qui tracte la chargeuse,
- un système de pesage (23),
- un premier système de capteurs (20) destiné à identifier au moins une première propriété de produit récolté ou une caractéristique de produit récolté ainsi
- qu'un processeur de données (11), lequel met dans une relation les données de détermination de position, les données de pesage et les données identifiées avec le premier système de capteurs (20) puis conditionne et mémorise ces données acquises, de sorte qu'une acquisition de rendement en rapport avec la position est effectuée,
- au moyen d'un deuxième système de capteurs (22) est identifiée une valeur caractéristique de travail et l'acquisition de rendement en rapport avec la position est activée en cas de dépassement d'une valeur de seuil prédéfinie,
**caractérisé en. ce que** les données identifiées par le premier système de capteurs (20) sont impliquées dans l'acquisition de rendement en rapport avec la position en fonction de la valeur caractéristique de travail identifiée par le deuxième système de capteurs (22), une évaluation des valeurs mesurées identifiées par le premier système de capteurs (20) s'effectuant dans le processeur de données (11) sur la base de la 'valeur caractéristique de travail identifiée par le deuxième système de capteurs (22), de sorte que la précision du système dans son ensemble est optimisée.

6. Procédé pour faire fonctionner une récolteuse selon la revendication 5, **caractérisé en ce que** l'implication et la pondération des données dans la cartographie du rendement en rapport avec la position sont réalisées en fonction de l'évaluation des données identifiées par le premier système de capteurs.

7. Procédé pour faire fonctionner une récolteuse selon la revendication 5 ou 6, **caractérisé en ce que** la valeur de seuil dont le dépassement provoque une activation de l'acquisition de rendement en rapport avec la position est modifiable.

8. Procédé pour faire fonctionner une récolteuse selon l'une des revendications 5 à 7, **caractérisé en ce que** l'acquisition de rendement en rapport avec la position est désactivée lorsque la valeur caractéristique de travail identifiée par le deuxième système de capteurs (22) chute au-dessous de la valeur de seuil définie.

9. Procédé pour faire fonctionner une récolteuse selon l'une des revendications 5 à 8, **caractérisé en ce que** le processeur de données (11) réalise l'identification de l'au moins une propriété de produit récolté ou de la caractéristique de produit récolté par le premier système de capteurs (20) dans un nombre réglable par unité de temps.

10. Procédé pour faire fonctionner une récolteuse selon l'une des revendications 5 à 9, **caractérisé en ce que** l'identification de l'au moins une propriété de produit récolté ou de la caractéristique de produit récolté par le premier système de capteurs (20) s'effectue de manière redondante au niveau de deux positions ou plus.

11. Procédé pour faire fonctionner une récolteuse selon l'une des revendications 5 à 10, **caractérisé en ce qu'**un système de capteurs (20) disposé au niveau d'une position comporte au moins deux capteurs individuels (20.1 ; 20.2 ; 20.3 ; 20.4).

12. Procédé pour faire fonctionner une récolteuse selon l'une des revendications 5 à 11, **caractérisé en ce qu'**un facteur de correction est impliqué pour le calcul des données sur les ingrédients acquises au niveau, d'une position locale, lequel permet une association des ingrédients acquis à la position respective à laquelle le produit récolté qui passe devant le premier système de capteurs (20) a été réceptionné par le dispositif de réception (16).
